# EUROPÄISCHE PATENTSCHRIFT

(11) **EP 1 991 440 B1**
(45) Veröffentlichungstag und Bekanntmachung des Hinweises auf die Patenterteilung: **04.08.2010**
(21) Anmeldenummer: 07818737.4
(22) Anmeldetag: 05.10.2007
(51) Int. Cl.: B60N 2/30

(54) **FLUGZEUGSITZ**
AIRPLANE SEAT
SIEGE D'AVION

(30) Priorität: 06.10.2006 EP 06021009
(43) Veröffentlichungstag der Anmeldung: 19.11.2008
(60) Teilanmeldung: 09006725.7
(73) Patentinhaber: Lufthansa Technik AG, 22335 Hamburg (DE)
(72) Erfinder: MERENSKY, Harald, 22359 Hamburg (DE)
(74) Vertreter: Glawe, Delfs, Moll
(86) Internationale Anmeldenummer: PCT/EP2007/008661
(87) Internationale Veröffentlichungsnummer: WO 2008/043485

(56) Entgegenhaltungen:
- WO-A-01/49518
- FR-A- 2 877 615
- US-A- 2 833 336
- US-A1- 2005 146 182
- US-B1- 6 769 735

## Beschreibung

Die Anmeldung betrifft einen Sitz für ein Verkehrsmittel, mit einer Sitzfläche und einer Rückenlehne. Der Sitz weist einen Reboard-Sitzbügel auf, der im unteren Bereich der Rückenlehne und/oder im Verbindungs-/Übergangsbereich von Rückenlehne und Sitzfläche schwenkbar gelagert ist. Wenigstens ein Teil des Polsters der Rückenlehne ist mit dem Reboard-Sitzbügel verbunden und mit diesem Sitzbügel verschwenkbar. Der Reboard-Sitzbügel ist in einem Stauzustand im Wesentlichen parallel zur Rückenlehne angeordnet. Aus dem Stauzustand kann der Reboard-Sitzbügel in einen Reboard-Nutzzustand verschwenkt werden, in dem er eine Winkelstellung zwischen den Ebenen der Rückenlehne und der Sitzfläche einnimmt. Im Reboard-Nutzzustand bildet der mit dem Reboard-Sitzbügel verbundene und mit diesem Sitzbügel verschwenkbare Teil des Polsters der Rückenlehne die Sitzfläche eines Reboard-Kindersitzes.

Die Erfindung betrifft ferner ein Sitzsystem für ein Verkehrsmittel. Das Sitzsystem umfasst einen Sitz mit einer Sitzfläche sowie einen ein Polster haltenden Reboard-Sitzbügel. Es ist eine lösbare Verbindung zwischen dem Reboard-Sitzbügel und dem Sitz vorgesehen, wobei der Reboard-Sitzbügel im verbundenen Zustand schwenkbar gegenüber dem Sitz gelagert ist. In einem Reboard-Nutzzustand ist der Reboard-Sitzbügel in einer gegenüber der Sitzfläche geneigten Stellung fixiert. Schließlich betrifft die Erfindung einen Reboard-Sitzbügel für ein solches Sitzsystem.

Mit einem Sitz bzw. einem Sitzsystem dieser Art können Kleinkinder in öffentlichen Verkehrsmitteln gut gesichert werden, siehe US 6,769,735 B1. Den Kindern wird ein besserer Schutz geboten, als ihn die Beckengurte herkömmlicher Sitze bieten können. Insbesondere in Flugzeugen ist es jedoch nicht erforderlich, dass das Kleinkind während der gesamten Dauer der Reise in dieser Weise gesichert ist. Genau wie bei Erwachsenen ist es vielmehr ausreichend, wenn das Kleinkind während des Starts, während der Landung und während Turbulenzen gesichert ist.

Aus WO 01/49518 A1, die den nächstliegenden Stand der Technik darstellt und alle Merkmale des Oberbegriffs des Anspruchs 1 offenbart, ist ein Passagiersitz bekannt, der in einen Kindersitz umgewandelt werden kann. Die Lehne des Passagiersitzes kann nach vorne geklappt werden, wodurch zugleich zwei Elemente der Rückenlehne so bewegt werden, dass sie einen Kindersitz bilden.

Der Erfindung liegt die Aufgabe zugrunde, einen Sitz (Anspruch 1) und ein Sitzsystem (Anspruch 15) der eingangs genannten Art vorzustellen, die eine größere Flexibilität in Phasen der Reise bieten, in denen eine besondere Sicherung des Kleinkinds nicht erforderlich ist.

Der erfindungsgemäße Sitz zeichnet sich zunächst dadurch aus, dass der mit dem Reboard-Sitzbügel verbundene und mit diesem Sitzbügel verschwenkbare Teil des Polsters der Rückenlehne die Sitzfläche eines Reboard-Kindersitzes bildet. Ein oberer Teil des Polsters ist schwenkbar mit einem oberen Bereich des Reboard-Sitzbügels verbunden. Die beiden Teile des Polsters sind schwenkbar miteinander verbunden und der untere Teil des Polsters ist verschieblich mit dem unteren Bereich des Reboard-Sitzbügels verbunden. Der Reboard-Sitzbügel kann ferner in einen Liegezustand verschwenkt werden, in dem er im Wesentlichen parallel zur Sitzfläche angeordnet ist.

Zunächst seien einige im Rahmen der Erfindung verwendete Begriffe erläutert.

Der Begriff Reboard-Sitz bezeichnet einen Sitz, in dem kleine Kinder (vorzugsweise unter zwei Jahren) entgegen der üblichen Sitzrichtung transportiert werden können.

Der erfindungsgemäße Sitz weist einen integrierten Reboard-Kindersitz auf. Zu diesem Zweck ist ein Reboard-Sitzbügel vorgesehen, der diesen Reboard-Kindersitz trägt. Er ist im unteren Bereich der Rückenlehne oder im Verbindungs/Übergangsbereich von Rückenlehne und Sitzfläche schwenkbar gelagert. Die Schwenkbarkeit ist so ausgebildet, dass er von einen Stauzustand, in dem er im Wesentlichen parallel zur Rückenlehne angeordnet ist, in einen Reboard-Nutzzustand verschwenkbar ist, in dem die Ebene des Reboard-Sitzbügels zwischen den Ebenen der Rückenlehne und der Sitzfläche liegt. Im Stauzustand kann der Reboard-Sitzbügel beispielsweise den Rahmen der Rückenlehne bilden.

Das Rückenlehnenpolster oder wenigstens ein Teil davon ist mit dem Reboard-Sitzbügel verbunden und gemeinsam mit ihm verschwenkbar. Im Reboard-Nutzzustand bildet dieser Teil des Polsters die Sitzfläche eines Reboard-Kindersitzes.

Im Reboard-Nutzzustand bildet-somit der verschwenkte Reboard-Sitzbügel den Rahmen eines Reboard-Kindersitzes. An diesem Rahmen ist der verschwenkbare Teil des Polsters der Rückenlehne als Sitzfläche befestigt. Im Rahmen der Erfindung ist es möglich, dass die Befestigung des verschwenkbaren Teils des Polsters der Rückenlehne ausschließlich am Reboard-Sitzbügel oder aber zusätzlich im unteren Bereich, am Sitz, insbesondere an dessen Rückenlehne, erfolgt.

Der Reboard-Sitzbügel soll im Stauzustand den Sitzkomfort für einen erwachsenen Passagier nicht oder allenfalls unwesentlich beeinträchtigen. Zu diesem Zweck kann vorgesehen sein, dass der Reboard-Sitzbügel im Stauzustand im Randbereich der Rückenlehne angeordnet ist oder die Rückenlehne seitlich sowie am oberen Rand umschließt. Er verläuft dann nicht durch den gepolsterten Bereich der Rückenlehne. Alternativ kann vorgesehen sein, dass der Reboard-Sitzbügel (insbesondere dessen oberer Rand) so tief in einer Aussparung der Rückenlehnenpolster versenkt wird, dass er den Sitzkomfort nicht beeinträchtigt.

Der Reboard-Sitzbügel ist vorzugsweise im Wesentlichen U-förmig ausgebildet. Bei einem Draufblick auf den Sitz weist er die Form eines umgedrehten U auf. Die beiden langen Schenkel des U sind im Seitenbereich der Rückenlehne angeordnet, der Boden des U im Bereich des oberen Randes der Rückenlehne.

Der Reboard-Sitzbügel ist zusätzlich in einen Liegezustand verschwenkbar, in dem er im Wesentlichen parallel zur Sitzfläche angeordnet ist. In diesem Liegezustand verlängert der verschwenkbare Teil des Polsters der Rückenlehne die Sitzfläche des Sitzes weiter nach vorne. Wenn eine Sicherung von Babys und Kleinkindern nicht mehr erforderlich ist (beispielsweise nach Erreichen der Reiseflughöhe eines Flugzeugs), kann durch Verschwenken in den Liegezustand eine flache Liegefläche gebildet werden.

Der Reboard-Sitzbügel muss in der vorgesehen Winkelstellung des Reboard-Nutzzustands fixiert werden. Dies kann dadurch geschehen, dass sich der Reboard-Sitzbügel im Reboard-Nutzzustand auf den Armlehnen des Sitzes und/oder mit den Armlehnen des Sitzes verbundene Halteeinrichtungen abstützt. Beispielsweise können nach innen aus den Armlehnen hervorfahrbare Bolzen vorgesehen sein, die eine Auflagefläche für den.Reboard-Sitzbügel bilden.

Der mit dem Reboard-Sitzbügel verschwenkbare Teil des Polsters der Rückenlehne ist vorzugsweise beidseitig gepolstert. Im Stauzustand des Reboard-Sitzbügels kann die dann von der Rückenlehne wegweisende Seite dieses Polsters als Rückenlehnenpolster für Erwachsene oder größere Kinder genutzt werden. Im Reboard-Nutzzustand sowie im Liegezustand wird die gegenüberliegende Seite des Polsters der Rückenlehne als Sitzfläche eines Reboard-Kindersitzes beziehungsweise als Liegefläche genutzt.

Der mit dem Reboard-Sitzbügel verschwenkbare Teil des Polsters weist vorzugsweise einen im Wesentlichen starren Kern auf. "Im Wesentlichen starr" bedeutet in diesem Zusammenhand, dass das Polster im Reboard-Nutzzustand hinreichend formstabil ist, um eine Sitzfläche für Babys und Kleinkinder zu bilden.

Der mit dem Reboard-Sitzbügel verschwenkbare Teil des Polsters der Rückenlehne ist zweiteilig ausgebildet. Die beiden Teile des Polsters sind schwenkbar miteinander verbunden. "Schwenkbar" bedeutet in diesem Zusammenhang eine Gelenkverbindung oder einfach eine flexible Verbindung der beiden Polsterteile. Es kann hier beispielsweise ein Materialabschnitt vorgesehen sein, der weniger starr ist als die übrigen Bereiche des Polsters. Der obere Teil dieses zweiteilig ausgebildeten Polsters ist mit einem oberen Bereich des Reboard-Sitzbügels schwenkbar verbunden. Der untere Teil des Polsters ist verschieblich mit dem unteren Bereich des Reboard-Sitzbügels verbunden. Beispielsweise kann er mittels geeigneter Führungen in Langlöchern des Reboard-Sitzbügels verfahrbar und gegebenenfalls in verschiedenen Stellungen fixierbar sein.

Im Stauzustand bilden die beiden Teile des Polsters vorzugsweise eine einheitliche Rückenlehne, sind also nicht oder kaum gegeneinander verschwenkt. Im Reboard-Nutzzustand werden die beiden Teile gegeneinander verschwenkt und der untere Bereich des unteren Teils des Polsters am Reboard-Sitzbügel nach oben gefahren, so dass sich eine Reboard-Sitzmulde ausbildet.

Der Reboard-Sitzbügel kann zusätzlich einen ausfahrbaren Sichtschutz aufweisen. Dieser kann beispielsweise aus einem Stoff gebildet sein und einen oder mehrere entsprechende verstellbare Spannbügel aufweisen. Er kann insbesondere im Liegezustand verwendet werden und im Kindersitz befindliche Kinder vor optischen Einflüssen und Zugluft schützen.

Erfindungsgemäß ist es bevorzugt, dass der Reboard-Sitzbügel und/oder der mit dem Reboard-Sitzbügel verschwenkbare Teil des Polsters der Rückenlehne Fixiervorrichtungen für einen Beckengurt des Sitzes aufweisen. Bei dieser Ausführungsform der Erfindung kann ein wesentlicher Teil der auf den Reboard-Sitz wirkenden Kräfte beim Bremsen des Verkehrsmittels oder im Falle eines Unfalls über den Gurt in das Sitzgestell abgeleitet werden.

Vorzugsweise ist die Länge der Sitzfläche des Sitzes verstellbar. Auf diese Art und Weise ist eine Anpassung an die Oberschenkellänge des Passagiers möglich. Vorzugsweise weist der Sitz Armlehnen auf, deren Abstand zueinander verstellbar ist. Durch Vermindern des Abstands der Armlehnen kann der Sitz für kleinere Kinder "enger" gemacht werden. Ferner kann auch die Höhe der Armlehnen einstellbar sein.

In einer vorteilhaften Ausführungsform umfasst der Sitz zusätzlich zu einer Armlehne eine Kinderarmlehne. Zusätzlich umfassen bedeutet, dass die Armauflagefläche der Kinderarmlehne eine andere ist als die Armauflagefläche der Armlehne. Die Kinderarmlehne kann eine Staustellung und eine Nutzstellung einnehmen. In der Staustellung ist die Kinderarmlehne in die Kontur der Armlehne einbezogen, die Kinderarmlehne ragt also in seitlicher Richtung im Wesentlichen nicht über die Armauflagefläche der Armlehne hinaus. In der Nutzstellung hat die Kinderarmlehne in vertikaler Richtung einen verminderten Abstand zur Sitzfläche und in horizontaler Richtung einen verminderten Abstand zur gegenüberliegenden Armlehne. Vermindert ist der Abstand jeweils im Vergleich zur Armauflagefläche der Armlehne.

Es sind verschiedene Mechanismen denkbar, mittels derer die Kinderarmlehne zwischen dem Nutzzustand und dem Stauzustand wechselt. Möglich ist es beispielsweise, dass die Kinderarmlehne entlang von Führungsschienen in die Armlehne eingeschoben wird. In einer vorteilhaften Ausführungsform wird die Kinderarmlehne zum Wechseln zwischen dem Nutzzustand und dem Stauzustand um eine zur Armlehne paralle Achse geschwenkt.

Es kann ein mit einem Metallelement zusammenwirkender Magnet vorgesehen sein, um die Kinderarmlehne im Stauzustand zu halten. Ein solcher Verschluss ist verschleißfrei. Um die Kinderarmlehne aus dem Stauzustand zu lösen, muss die Magnetkraft überwunden werden. Es kann dazu ein Handgriff an der Kinderarmlehne vorgesehen sein, an dem die Bedienperson direkt im Stauzustand angreifen kann. Optisch ansprechender ist es jedoch, wenn sich die Kinderarmlehne im Stauzustand möglichst glattflächig in die Armlehne einfügt. Um den Magneten dennoch lösen zu können, wird die Kinderarmlehne zunächst in einen Zwischenzustand zwischen dem Stauzustand und dem Nutzustand gebracht, in dem die Kinderarmlehne hintergriffen werden kann.

Der erfindungsgemäße Sitz kann beispielsweise in Flugzeugen, Bussen oder Bahnen verwendet werden.

Das erfindungsgemäße Sitzsystem zeichnet sich dadurch aus, dass das Polster einen oberen und einen unteren Teil umfasst, wobei der obere Teil des Polsters schwenkbar mit einem oberen Bereich des Reboard-Sitzbügels verbunden ist, wobei die beiden Teile des Polsters schwenkbar miteinander verbunden sind und wobei der untere Teil des Polsters verschieblich mit dem unteren Bereich des Reboard-Sitzbügels verbunden ist. Beispielsweise kann er mittels geeigneter Führungen in Langlöchern des Reboard-Sitzbügels verfahrbar und gegebenenfalls in verschiedenen Stellungen fixierbar sein. Ferner ist der Reboard-Sitzbügel in einen Liegezustand verschwenkbar, in dem er im Wesentlichen parallel zur Sitzfläche angeordnet ist.

Bei dem zuvor beschriebenen erfindungsgemäßen Sitz ist der Reboard-Sitzbügel fest mit dem Sitz verbunden. Im Stauzustand ist der Reboard-Sitzbügel so angeordnet, dass man auf dem Sitz ohne größere Komforteinbußen sitzen kann. Geringfügige Komforteinbußen lassen sich jedoch nicht vermeiden. Bei gehobenen Komfortansprüchen können auch diese geringfügigen Beeinträchtigungen nicht akzeptiert werden.

Bei dem erfindungsgemäßen Sitzsystem ist der Erfindungsgedanke in einer Weise verwirklicht, in der der Sitz ohne Einschränkungen verwendet werden kann, wenn der Reboard-Sitz nicht genutzt wird. Der Reboard-Sitzbügel ist ein separates Teil, das nur bei Bedarf dann mit dem Sitz verbunden wird. Für die übrige Zeit wird der Reboard-Sitzbügel an anderer Stelle verstaut.

Um das Kind zu sichern, wird der Reboard-Sitzbügel in den Reboard-Nutzzustand gebracht, in dem er mit seinem unteren Ende mit dem Sitz verbunden ist und so gegenüber dem Sitz fixiert ist, dass er gegenüber der Sitzfläche geneigt ist.

Im Reboard-Nutzzustand ist das von dem Reboard-Sitzbügel gehaltene Polster so mit dem Reboard-Sitzbügel bzw. mit geeigneten Elementen des Sitzes verbunden, dass eine Sitzmulde entsteht. In diese Sitzmulde kann das Kleinkind gesetzt werden und mit Gurten gesichert werden. Um den Reboard-Sitzbügel vom Reboard-Nutzzustand in den Liegezustand zu bringen, wird der untere Teil des Polsters gegenüber dem Reboard-Sitzbügel verschoben, so dass das Polster im Wesentlichen parallel zum Reboard-Sitzbügel ausgerichtet sind. Der Reboard-Sitzbügel wird so geschwenkt, dass er im Wesentlichen parallel zur Sitzfläche ausgerichtet ist. Das Polster bildet dann eine ebene Fläche, auf der das Kleinkind liegen kann.

Das Schwenklager zwischen dem Reboard-Sitzbügel und dem Sitz kann Bestandteil des Sitzes oder Bestandteil des Reboard-Sitzbügels sein. Möglich ist es aber auch, dass die Verbindung zwischen dem Reboard-Sitzbügel und dem Sitz zugleich das Schwenklager bildet. Beispielsweise kann das Schwenklager einen in einer Lagerschale geführten Lagerbolzen umfassen. Beim Verbinden des Reboard-Sitzbügels mit dem Sitz wird der Lagerbolzen in die Lagerschale eingeführt, zum Trennen wird der Lagerbolzen aus der Lagerschale herausgezogen.

Um im Reboard-Nutzzustand ein Schwenken des Reboard-Sitzbügels gegenüber dem Sitz zu verhindern, ist ein Halteelement vorgesehen. Das Haltemittel kann so ausgelegt sein, dass es die Kraft auf einen Bestandteil des Sitzes oder auf ein sonstiges in fester räumlicher Beziehung zu dem Sitz stehendes Element überträgt. In einer vorteilhaften Ausführungsform wird die Kraft auf eine Armlehne des Sitzes übergeleitet. Das Halteelement kann sich in geeigneter Weise auf der Armlehne oder einem mit der Armlehne verbundenen Element abstützen. Ein sicherer Halt kann erreicht werden, wenn das Halteelement eine Haltebohrung und einen in die Haltebohrung einführbaren Haltebolzen umfasst.

Der Reboard-Sitzbügel des Sitzsystems ist ein eigenständiger Erfindungsgegenstand. Der Reboard-Sitzbügel und der Sitz des erfindungsgemäßen Sitzsystems können mit weiteren Merkmalen kombiniert werden, die im Zusammenhang mit dem erfindungsgemäßen Sitz detailliert beschrieben sind.

Der erfindungsgemäße Sitz bzw. das erfindungsgemäße Sitzsystem werden vorzugsweise neben einem üblichen Sitz angeordnet. Ein auf dem üblichen Sitz sitzender Erwachsener kann dann während der Reise ein in dem Reboard-Sitzbügel untergebrachtes Kind betreuen. Für den häufigen Fall, dass ein Erwachsener mit zwei Kindern reist, kann auch auf der anderen Seite des üblichen Sitzes ein Sitz angeordnet sein, der in einem seiner Zustände für Kinder bestimmt ist. Letzterer Sitz kann einen Reboard-Sitzbügel umfassen, er kann aber auch auf andere Weise an Kinder angepasst sein.

Ein Ausführungsbeispiel der Erfindung wird im Folgenden anhand der Zeichnungen beschrieben. Darin zeigen:
- Fig. 1: schematisch einen erfindungsgemäßen Sitz von der Seite, bei dem der Reboard-Sitzbügel in der Reboard- Nutzstellung ist;
- Fig. 2: eine entsprechende Ansicht des Sitzes von vorne;
- Fig. 3: einen erfindungsgemäßen Sitz mit dem Reboard-Sitzbügel im Stauzustand;
- Fig. 4-6: Ansichten des Sitzes mit unterschiedlicher Länge der Sitzfläche angepasst an die Oberschenkellänge der Benutzer;
- Fig. 7: die Benutzung des Sitzes im Reboard-Nutzzustand;
- Fig. 8: den Reboard-Sitz im Liegezustand;
- Fig. 9: eine Ansicht des Sitzes von oben mit einem Schnitt durch die Rückenlehne (Reboard-Sitzbügel in Staustel- lung);

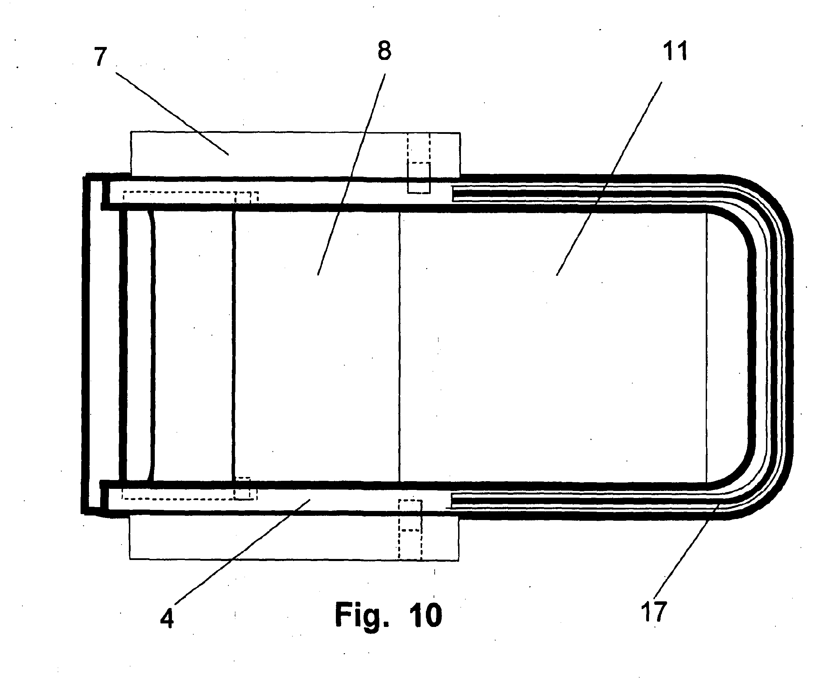

- Fig. 10: eine Ansicht des Sitzes von oben (Reboard-Sitzbügel in Reboard-Nutzstellung);
- Fig. 11: zwei erfindungsgemäße Sitze mit Kinderarmlehnen;
- Fig. 12: eine Armlehne mit einer Kinderarmlehne im Stauzustand;
- Fig. 13: eine Armlehne mit einer Kinderarmlehne im Nutzzustand;
- Fig. 14: die Armlehne aus Fig. 12 in einer Seitenansicht;
- Fig. 15: ein erfindungsgemäßes Sitzsystem im Reboard- Nutzzustand;
- Fig. 16: das Sitzsystem aus Fig. 15 im Liegezustand;
- Fig. 17: das Sitzsystem aus Fig. 15 und 16 in einer Ansicht von oben;
- Fig. 18: einen Reboard-Sitzbügel eines erfindungsgemäßen Sitz- systems in einer Ansicht von oben; und
- Fig. 19: den Reboard-Sitzbügel aus Fig. 18 in einer Seitenan- sicht.

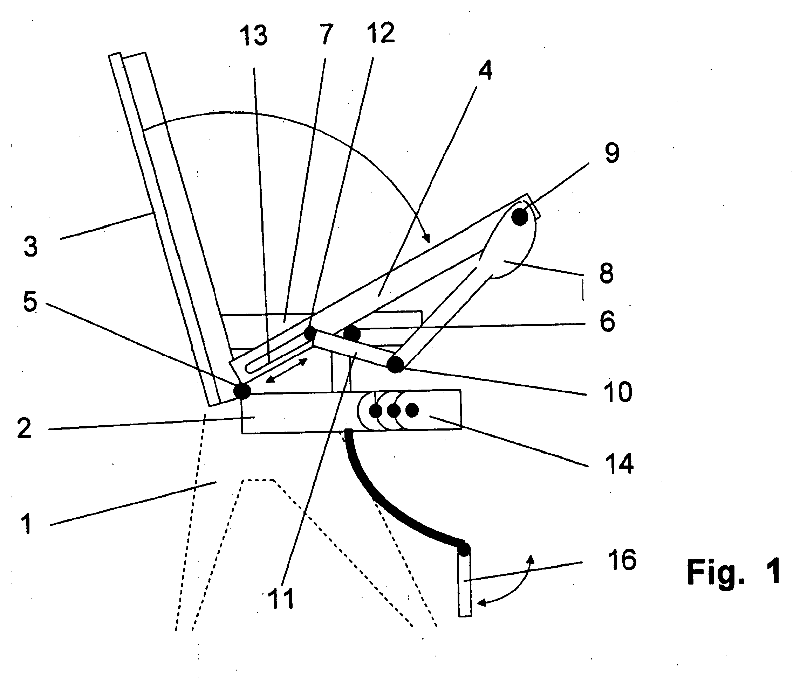

Der in Fig. 1 dargestellte Sitz weist ein bei 1 angedeutetes Grundgestell auf, mit dem er am Boden der Flugzeugkabine befestigt ist. Auf diesem Grundgestell 1 ist eine Sitzfläche 2 und eine Rückenlehne 3 angeordnet.

Die Rückenlehne 3 ist gegenüber der Sitzfläche 2 in bekannter Weise in der Neigung verstellbar.

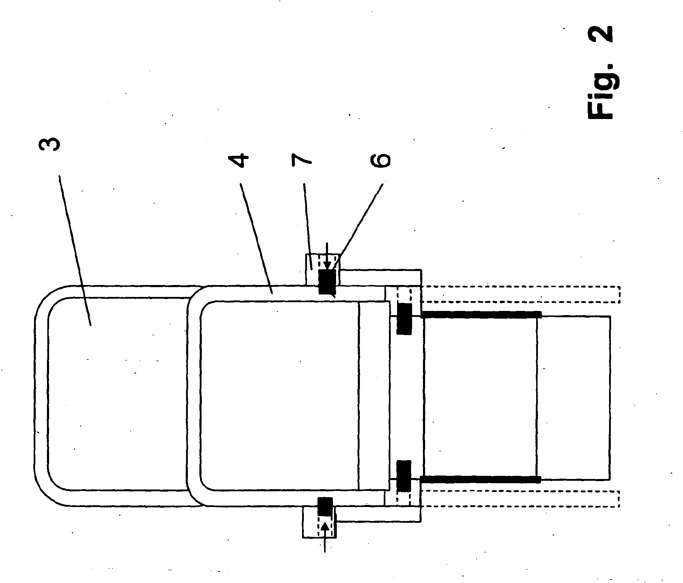

Ein Reboard-Sitzbügel 4 ist bei 5 (im Verbindungsbereich von Sitzfläche 2 und Rückenlehne 3) schwenkbar befestigt. In der in Fig. 1 gezeigten Darstellung befindet sich der Reboard-Sitzbügel 4 in der Reboard-Nutzstellung. Dabei stützt er sich auf verschieblichen Stützstiften 6 ab, die aus den Armlehnen 7 herausgefahren werden können (siehe Fig. 2).

In dem von dem U-förmigen Reboard-Sitzbügel 4 eingeschlossenen Innenraum ist ein zweiteiliges Polster angeordnet. Der obere Polsterteil 8 ist im oberen Bereich des Reboard-Sitzbügels 4 bei 9 schwenkbar befestigt. An dem oberen Polsterteil 8 ist bei 10 ein unterer Polsterteil 11 schwenkbar befestigt. Das entgegengesetzte (untere) Ende des unteren Polsterteils 11 ist bei 12 in einem Langloch 13 des Reboard-Sitzbügels 4 verschieblich gelagert.

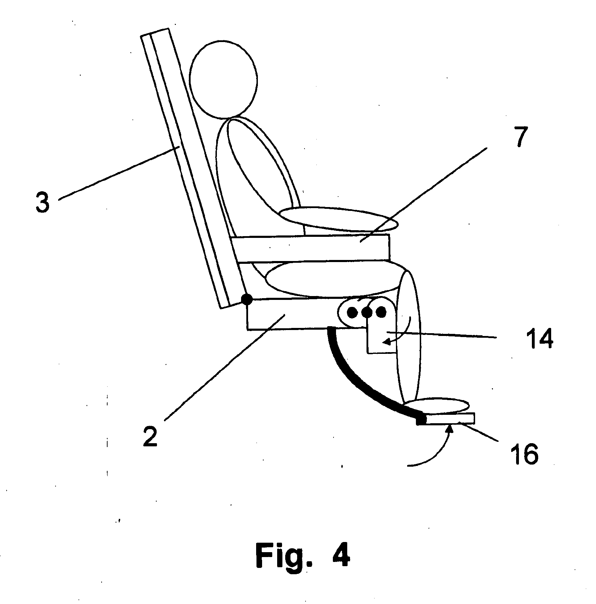

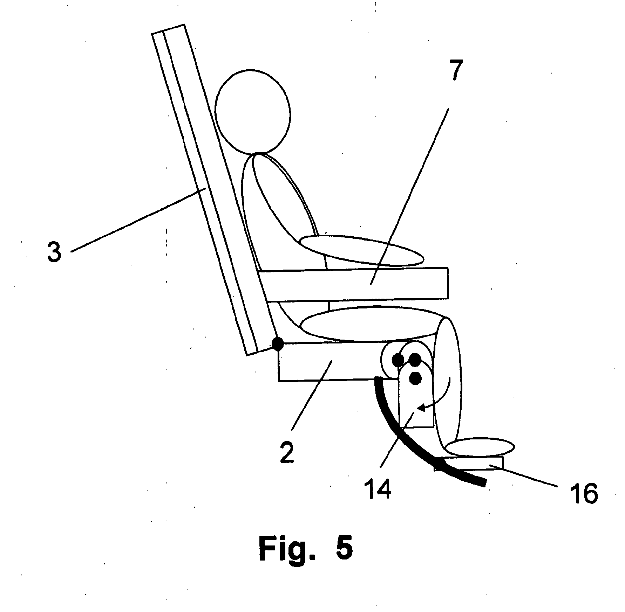

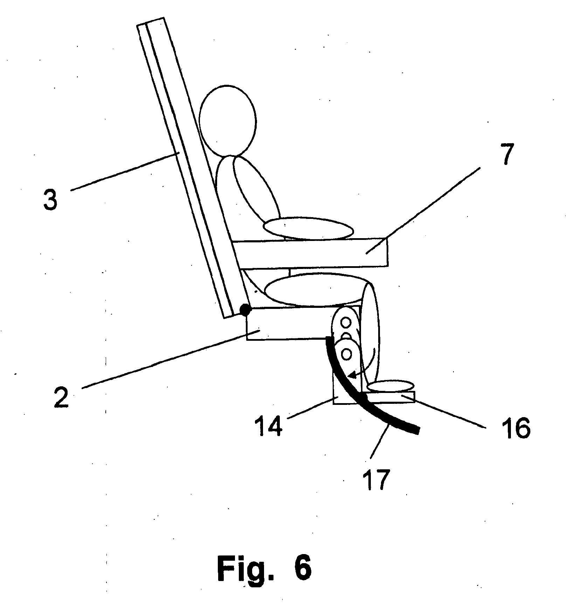

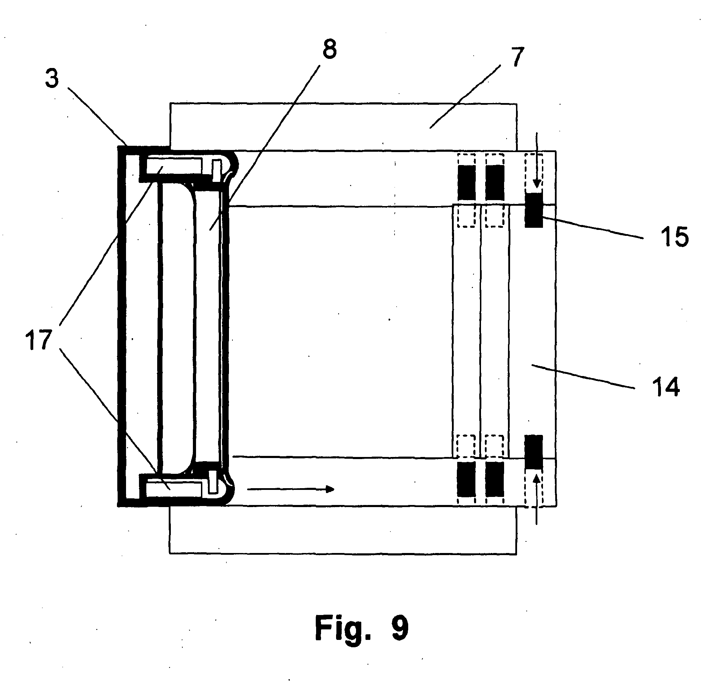

Die Länge der Sitzfläche 2 ist wie bei 14 angedeutet in der Länge veränderlich. Zu diesem Zweck können vordere Teilabschnitte der Sitzfläche 2 durch entsprechende Verriegelungsstifte 15 (siehe Fig. 9) ver- beziehungsweise entriegelt und im entriegelten Zustand nach unten zur Verkürzung der Sitzfläche abgeklappt werden. In den Fig. 4 bis 6 ist erkennbar, wie auf diese Art und Weise die Sitzfläche sukzessive abhängig von der Körpergröße des Passagiers verkürzt werden kann.

Der Sitz weist zusätzlich eine bei 16 schematisch dargestellte Fußstütze auf.

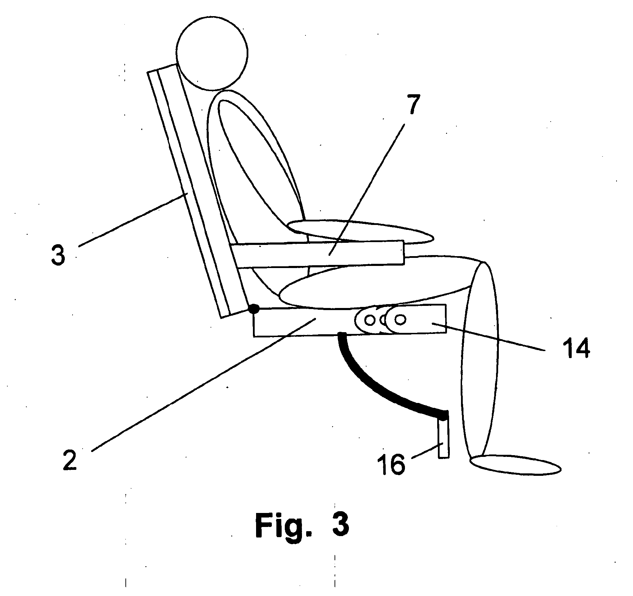

Die Fig. 3 bis 6 zeigen schematisch, wie der erfindungsgemäße Sitz in herkömmlicher Weise mit dem Reboard-Sitzbügel in der Staustellung genutzt werden kann. Fig. 3 zeigt die Nutzung durch einen Erwachsenen mit einer Körpergröße von 1,75 m, die Fig. 4 bis 6 die Nutzung durch Kinder mit Körpergrößen von 1,16 m, 1,04 m beziehungsweise 0,92 m. Es handelt sich hier um die statistischen Durchschnittsgrößen, von sechs-, vier- beziehungsweise zweijährigen Kindern. Dabei ist es möglich, die Armlehnen 7 nach innen zu verschieben und damit ihren Abstand zu verringern, um den Sitz bei der Nutzung durch Kinder zu verengen.

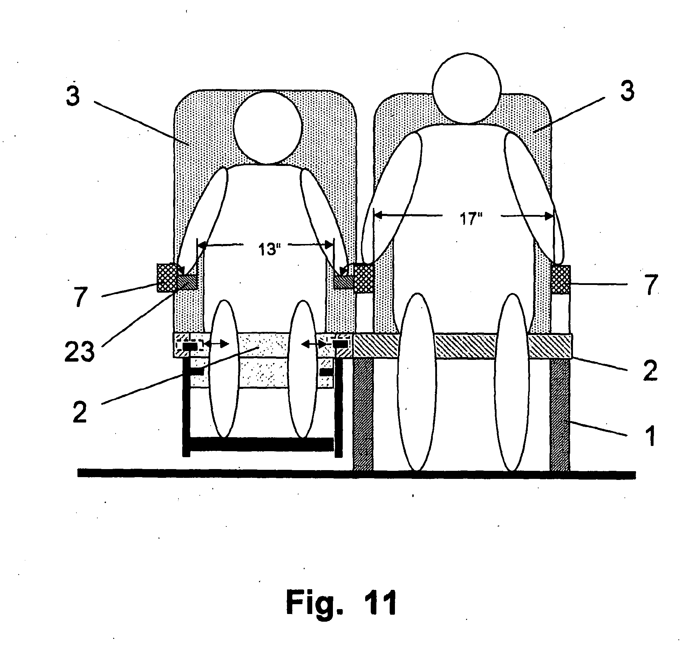

In den Figuren 11 bis 14 wird eine für Kinder bequeme Position der Armlehnen dadurch erreicht, dass die Armlehnen 7 des Sitzes 2, 3 zusätzliche Kinderarmlehnen 23 umfassen. Bei dem in Fig. 11 rechts dargestellten Sitz 2, 3 sind die Kinderarmlehnen im Stauzustand und deswegen nicht sichtbar. Die Armlehnen 7 sind so zueinander und zu der Sitzfläche 2 beabstandet, dass ein Erwachsener bequem sitzen kann. Bei dem in Fig. 11 links dargestellten Sitz sind die Kinderarmlehnen 23 im Nutzzustand. Die Kinderarmlehnen 23 sind so zueinander und zu der Sitzfläche 2 beabstandet, dass ein Kind bequem sitzen kann.

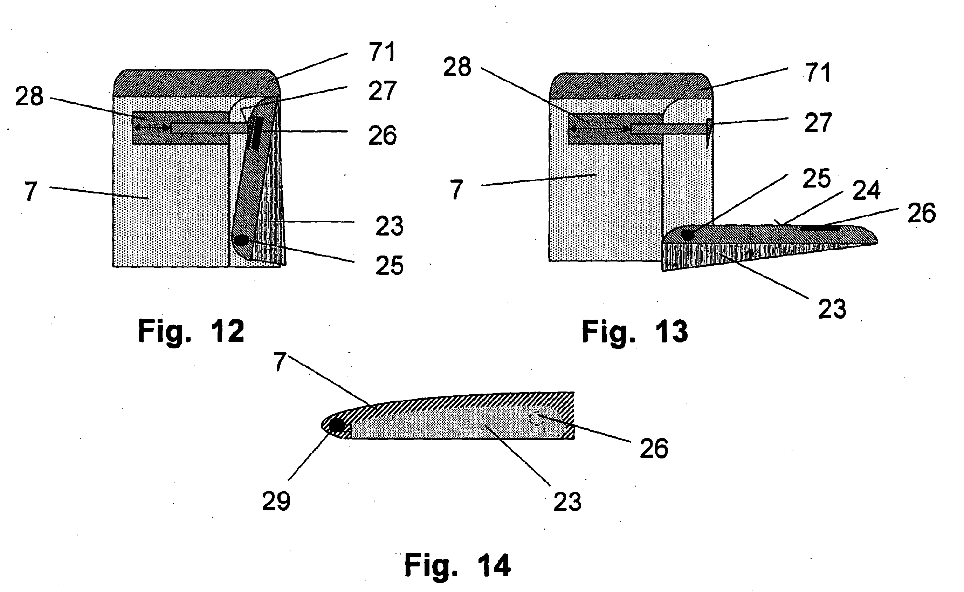

Im Stauzustand ist die Kinderarmlehne 23 gemäß Fig. 12 in die Kontur der Armlehne 7 einbezogen. Die Kinderarmlehne 23 ragt also zur Seite hin im Wesentlichen nicht über die Armauflagefläche 71 der Armlehne 7 hinaus. Die Kinderarmlehne 23 wird um eine Achse 25 geschwenkt, um sie in die Fig. 13 gezeigte Nutzstellung zu bringen. Das Kind kann seine Arme auf der Armauflagefläche 24 ablegen.

Die Kinderarmlehne 23 wird durch einen Magneten 26, der mit einem Metallteil 27 zusammenwirkt in der Staustellung gehalten. Das Metallteil 27 ist an einem Mechanismus 28 angebracht, der zwei Stellungen einnehmen kann. In der in Fig. 12 gezeigten Stellung hält der Mechanismus 28 die Kinderarmlehne 23 so, dass sie bündig mit der Armlehne 7 abschließt. In der in Fig. 13 gezeigten Stellung hält der Mechanismus die Kinderarmlehne 23 in einer Zwischenstellung, so dass sie hintergriffen werden kann, um den Magnet 26 von dem Metallteil 27 zu lösen. Um den Mechanismus von der einen Stellung in die andere zu bringen, wird jeweils über die Kinderarmlehne 23 ein Druckimpuls auf das Metallteil 27 ausgeübt. Über den Betätigungsknopf 29 kann die Neigung der Rückenlehne 3 verändert werden.

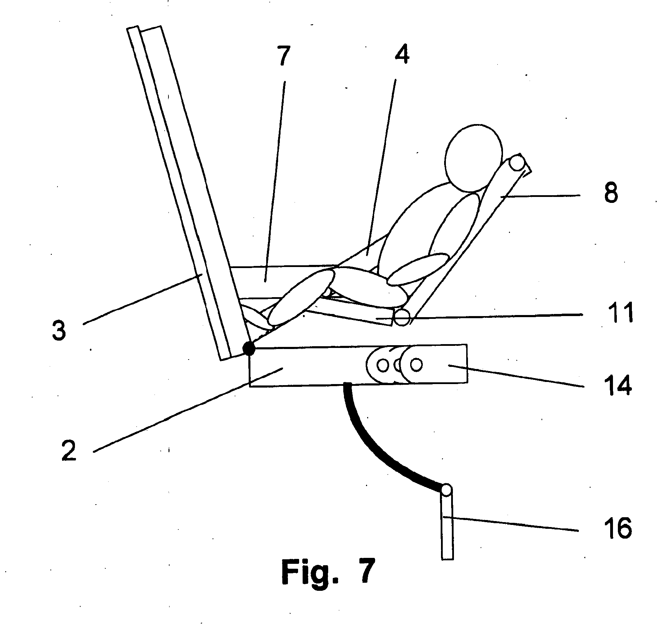

Wenn der Sitz für kleinere Kinder genutzt werden soll, wird er in die sogenannte Reboard-Nutzstellung gebracht. Zu diesem Zweck wird der Reboard-Sitzbügel 4 nach unten geklappt. Aus den Armlehnen 7 werden Haltestifte 6 ausgefahren, auf denen der Reboard-Sitzbügel 4 in der in Fig. 1 gezeigten Winkelstellung aufliegt. Anschließend werden die beiden Polsterteile 8, 11 aus der Ebene des Reboard-Sitzbügels 4 nach unten herausgeschwenkt, bis sie die in Fig. 1 gezeigte Endstellung einnehmen. Die untere Befestigung 12 des Sitzpolsters 11 gleitet dabei in den Langlöchern 13 nach oben. Die beiden Polsterteile 8, 11 bilden jetzt zusammen eine Reboard-Sitzschale, in der Babys oder Kleinkinder sicher sitzen können (siehe Fig. 7). Dabei ist vorgesehen, dass die Kinder in der Sitzschale durch einen Gurt 22 gesichert werden. Zusätzlich ist es vorgesehen, dass der Beckengurt des Sitzes um die durch die Polsterteile 8, 11 gebildete Sitzschale herumgeführt wird (in der Zeichnung nicht dargestellt), um bei Bremsvorgängen beziehungsweise Unfällen auftretende Beschleunigungskräfte aufzunehmen und in das Grundgestell des Sitzes abzuleiten.

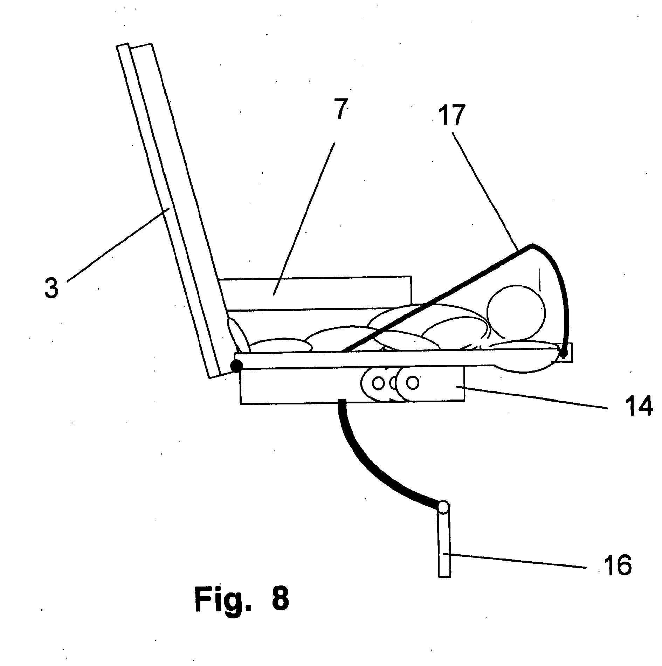

Nach Erreichen der Reiseflughöhe ist eine Sicherung von Babys und Kleinkindern wie bei Start und Landung nicht mehr erforderlich. Der Reboard-Sitzbügel kann dann in die in Fig. 8 gezeigte Liegestellung gebracht werden, in der er flach auf der Sitzfläche 2 aufliegt. Die Polsterteile 8, 11 werden dann wieder in die Ebene des Reboard-Sitzbügels 4 zurückbewegt und bilden eine einheitliche gerade Liegefläche für das Kind, deren Länge größer ist als die Länge der Sitzfläche 2 (siehe Fig. 8). Aus dem Reboard-Sitzbügel 4 kann ein Sichtschutz 17 ausgefahren werden, der Schutz gegen optische Einflüsse sowie Zugluft bieten kann.

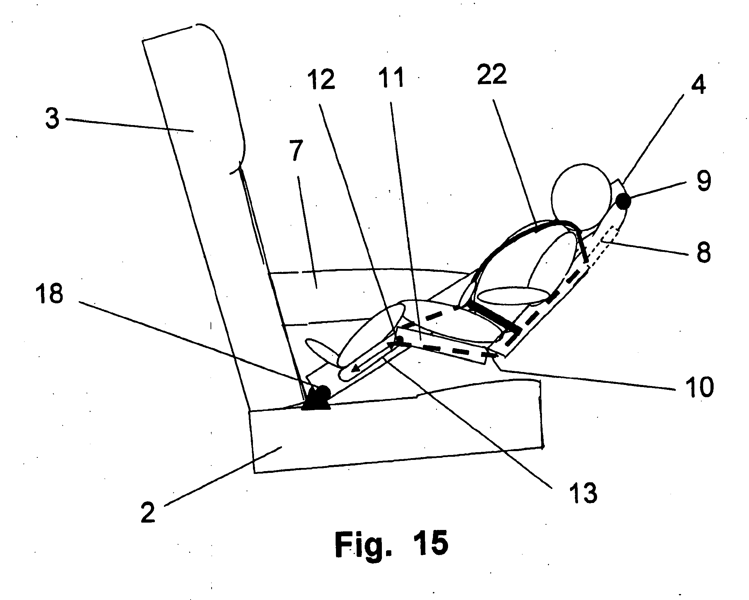

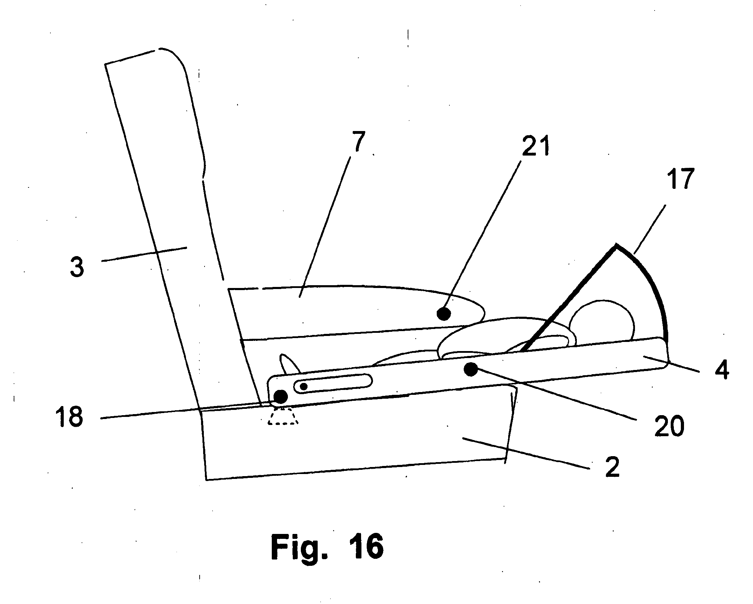

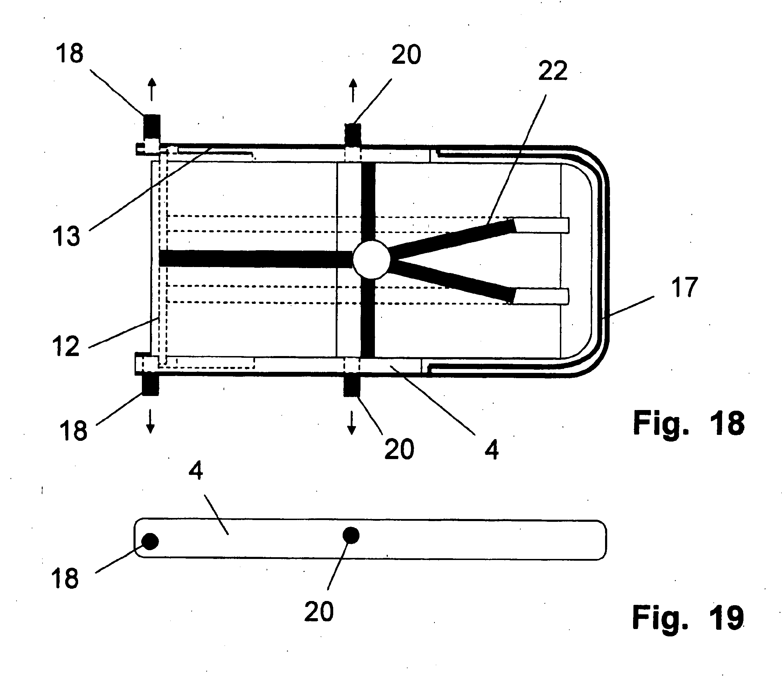

Bei dem in den Fig. 15 bis 19 gezeigten erfindungsgemäßen Sitzsystem ist der Reboard-Sitzbügel 4 lösbar mit dem Sitz 2, 3 verbunden. Wenn der Reboard-Sitzbügel 4 vom Sitz 2, 3 getrennt ist (Figuren 18 und 19) kann er an geeigneter Stelle verstaut werden. Da der Reboard-Sitzbügel 4 nicht in die Rückenlehne 3 integriert ist, kann der Sitz 2, 3 dann ohne jegliche Beeinträchtigung des Sitzkomforts genutzt werden.

Der Reboard-Sitzbügel 4 umfasst zwei Lagerbolzen 18, die in axialer Richtung gegen eine Federkraft im Reboard-Sitzbügel 4 versenkt werden können. Um den Reboard-Sitzbügel 4 mit dem Sitz 2, 3 zu verbinden, wird der Reboard-Sitzbügel 4 mit versenkten Lagerbolzen 18 zwischen Lagerschalen 19 des Sitzes 2, 3 positioniert. Die Lagerbolzen 18 gleiten unter der Federkraft in die Lagerschalen 19 und bilden ein Schwenklager zwischen dem Reboard-Sitzbügel 4 und dem Sitz 2, 3.

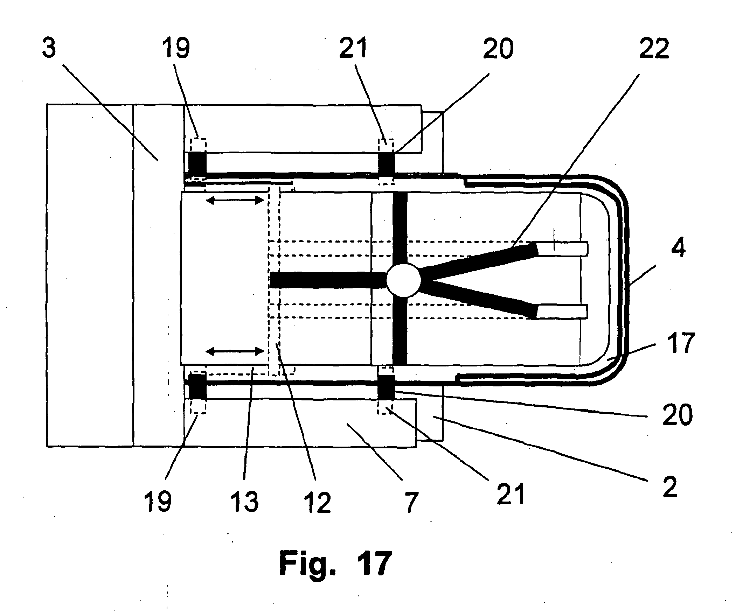

Um den Reboard-Sitzbügel 4 in den in Fig. 15 gezeigten Reboard-Nutzzustand zu bringen, werden zusätzlich Haltebolzen 20 in Haltebohrungen 21 der Armlehnen 7 eingeführt, siehe Fig. 17. Wenn die Haltebolzen 20 eingerastet sind, ist der Reboard-Sitzbügel 4 gegenüber Kräften aus allen Richtungen fixiert.

Im Reboard-Nutzzustand ist der untere Teil 11 des Polsters 8, 11 so in dem Langloch 13 positioniert, dass das Polster 8, 11 eine Sitzmulde bildet, in der das Kleinkind sitzen kann. Um den Reboard-Sitzbügel in den Liegezustand zu bringen, wird das untere Teil 11 des Polsters 8, 11 so in dem Langloch 13 verschoben, dass das Polster 8, 11 parallel zu dem Sitzbügel 4 ausgerichtet ist. Dann werden die Haltebolzen 20 aus den Haltebohrungen 21 herausgelöst, so dass der Reboard-Sitzbügel 4 geschwenkt werden kann und auf der Sitzfläche 2 abgelegt werden kann. Das Polster 8, 11 bildet eine ebene Fläche, auf der das Kleinkind liegen kann.

## Patentansprüche

1. Sitz für ein Verkehrsmittel, mit einer Sitzfläche (2) und einer Rückenlehne (3), mit folgenden Merkmalen:
a. der Sitz weist einen Reboard-Sitzbügel (4) auf, der im unteren Bereich der Rückenlehne (3) und/oder im Verbindungs/Übergangsbereich von Rückenlehne (3) und Sitzfläche (2) schwenkbar gelagert ist;
b. wenigstens ein Teil des Polsters (8, 11) der Rückenlehne (3) ist mit dem Reboard-Sitzbügel (4) verbunden und mit dem Reboard-Sitzbügel (4) verschwenkbar;
c. der Reboard-Sitzbügel (4) ist in einem Stauzustand im wesentlichen parallel zur Rückenlehne (3) angeordnet;
d. der Reboard-Sitzbügel (4) ist aus dem Stauzustand in einen Reboard-Nutzzustand verschwenkbar, in dem er eine Winkelstellung zwischen den Ebenen der Rückenlehne (3) und der Sitzfläche (2) einnimmt;
e. im Reboard-Nutzzustand bildet der mit dem Reboard-Sitzbügel (4) verbundene und mit diesem Sitzbügel verschwenkbare Teil des Polsters (8, 11) der Rückenlehne (3) die Sitzfläche eines Reboard-Kindersitzes, wobei ein oberer Teil (8) des Polsters schwenkbar mit einem oberen Bereich des Reboard-Sitzbügels (4) verbunden ist, wobei die beiden Teile des Polsters (8, 11) schwenkbar miteinander verbunden sind und wobei der untere Teil (11) des Polsters verschieblich mit dem unteren Bereich des Reboard-Sitzbügels (4) verbunden ist;
**gekennzeichnet durch** folgende Merkmale:
f. der Reboard-Sitzbügel (4) ist weiterhin in einen Liegezustand verschwenkbar, in dem er im Wesentlichen parallel zur Sitzfläche (2) angeordnet ist.

2. Sitz nach Anspruch 1, **dadurch gekennzeichnet, dass** der Reboard-Sitzbügel (4) im Stauzustand im Randbereich der Rückenlehne (3) angeordnet ist oder die Rückenlehne (3) seitlich sowie am oberen Rand umschließt.

3. Sitz nach Anspruch 1 oder 2, **dadurch gekennzeichnet, dass** der Reboard-Sitzbügel (4) im Wesentlichen U-förmig ausgebildet ist.

4. Sitz nach einem der Ansprüche 1 bis 3, **dadurch gekennzeichnet, dass** sich der Reboard-Sitzbügel (4) im Reboard-Nutzzustand auf Armlehnen (7) des Sitzes und/oder mit den Armlehnen (7) des Sitzes verbundenen Halteeinrichtungen (6) abstützt.

5. Sitz nach einem der Ansprüche 1 bis 4, **dadurch gekennzeichnet, dass** der mit dem Reboard-Sitzbügel (4) verschwenkbare Teil des Polsters (8, 11) der Rückenlehne beidseitig gepolstert ist.

6. Sitz nach einem der Ansprüche 1 bis 5, **dadurch gekennzeichnet, dass** der mit dem Reboard-Sitzbügel (4) verschwenkbare Teil des Polsters (8, 11) der Rückenlehne einen im wesentlichen starren Kern aufweist.

7. Sitz nach einem der Ansprüche 1 bis 6, **dadurch gekennzeichnet, dass** der mit dem Reboard-Sitzbügel (4) verschwenkbare Teil des Polsters (8, 11) der Rückenlehne zweiteilig ausgebildet ist.

8. Sitz nach einem der Ansprüche 1 bis 7, **dadurch gekennzeichnet, dass** der Reboard-Sitzbügel (4) und/oder der mit dem Reboard-Sitzbügel verschwenkbare Teil des Polsters (8, 11) der Rückenlehne Fixiereinrichtungen für einen Beckengurt des Sitzes aufweisen.

9. Sitz nach einem der Ansprüche 1 bis 8, **dadurch gekennzeichnet, dass** die Länge der Sitzfläche (2) verstellbar ist.

10. Sitz nach einem der Ansprüche 1 bis 9, **dadurch gekennzeichnet, dass** er Armlehnen (7) aufweist, deren Abstand zueinander verstellbar ist.

11. Sitz nach einem der Ansprüche 1 bis 10, **dadurch gekennzeichnet, dass** er zusätzlich zu einer Armlehne (7) eine Kinderarmlehne (23) umfasst, die eine Staustellung und eine Nutzstellung einnehmen kann, wobei die Kinderarmlehne (23) in der Staustellung in die Kontur der Armlehne (7) einbezogen ist und wobei die Kinderarmlehne (23) in einem Nutzzustand in vertikaler Richtung einen verminderten Abstand zur Sitzfläche (2) und in horizontaler Richtung einen verminderten Abstand zur gegenüberliegenden Armlehne (7) hat.

12. Sitz nach Anspruch 11, **dadurch gekennzeichnet, dass** die Kinderarmlehne (23) durch Schwenken um eine zur Armlehne (7) parallele Achse (25) zwischen dem Stauzustand und dem Nutzzustand wechselt.

13. Sitz nach Anspruch 11 oder 12, **dadurch gekennzeichnet, dass** ein mit einem Metallelement (27) zusammenwirkender Magnet (26) vorgesehen ist, um die Kinderarmlehne (23) im Stauzustand zu halten.

14. Sitz nach einem der Ansprüche 11 bis 13, **dadurch gekennzeichnet, dass** die Kinderarmlehne (23) zum Lösen des Magneten (26) von dem Metallelement (27) in einen Zwischenzustand zwischen dem Stauzustand und dem Nutzzustand gebracht wird.

15. Sitzsystem für ein Verkehrsmittel mit einem eine Sitzfläche (2) aufweisenden Sitz (2, 3) und einem ein Polster (8, 11) haltenden Reboard-Sitzbügel (4), umfassend die folgenden Merkmale:
a. es ist eine lösbare Verbindung (18, 19) zwischen dem Reboard-Sitzbügel (4) und dem Sitz (2, 3) vorgesehen, wobei der Reboard-Sitzbügel (4) im verbundenen Zustand schwenkbar gegenüber dem Sitz (2, 3) gelagert ist;
b. in einem Reboard-Nutzzustand ist der Reboard-Sitzbügel (4) in einer gegenüber der Sitzfläche (2) geneigten Stellung fixiert;
c. das Polster (8, 11) umfasst einen oberen Teil (8) und einen unteren Teil (11), wobei der obere Teil (8) des Polsters (8, 11) schwenkbar mit einem oberen Bereich des Reboard-Sitzbügels (4) verbunden ist, wobei die beiden Teile des Polsters (8, 11) schwenkbar miteinander verbunden sind und wobei der untere Teil (11) des Polsters verschieblich mit dem unteren Bereich des Reboard-Sitzbügels (4) verbunden ist;
**gekennzeichnet durch** folgende merkmale:
d. der Reboard-Sitzbügel (4) ist in einen Liegezustand verschwenkbar, in dem er im Wesentlichen parallel zur Sitzfläche (2) angeordnet ist.

16. Sitzsystem nach Anspruch 15, **dadurch gekennzeichnet, dass** die Verbindung zwischen dem Reboard-Sitzbügel (4) und dem Sitz (2, 3) zugleich das Schwenklager (18, 19) bildet.

17. Sitzsystem nach Anspruch 16, **dadurch gekennzeichnet, dass** das Schwenklager (18, 19) einen in einer Lagerschale (19) geführten Lagerbolzen (18) umfasst und dass zum Trennen des Reboard-Sitzbügels (4) vom Sitz (2, 3) der Lagerbolzen (18) aus der Lagerschale (19) herausgezogen wird.

18. Sitzsystem nach einem der Ansprüche 15 bis 17, **dadurch gekennzeichnet, dass** es ein Halteelement (20, 21) umfasst und dass das Halteelement (20, 21) im Reboard-Nutzzustand Kraft auf eine Armlehne (7) des Sitzes (2, 3) überleitet.

19. Sitzsystem nach Anspruch 18, **dadurch gekennzeichnet, dass** das Halteelement (20, 21) eine Haltebohrung (21) und einen in die Haltebohrung (21) einführbaren Haltebolzen (20) umfasst.

## Claims

1. Seat for a means of transport, with a seat surface (2) and a backrest (3), having the following features:
a. the seat has a reboard seat bar (4) which is mounted pivotably in the lower region of the backrest (3) and/or in the connecting/transition region of the backrest (3) and seat surface (2);
b. at least part of the cushion (8, 11) of the backrest (3) is connected to the reboard seat bar (4) and is pivotable together with the reboard seat bar (4);
c. the reboard seat bar (4) is arranged substantially parallel to the backrest (3) in a stowed state;
d. the reboard seat bar (4) is pivotable from the stowed state into a reboard use state in which it takes up an angular position between the planes of the backrest (3) and of the seat surface (2);
e. in the reboard use state, that part of the cushion (8, 11) of the backrest (3) which is connected to the reboard seat bar (4) and is pivotable together with said seat bar forms the seat surface of a reboard child seat, wherein an upper part (8) of the cushion is connected pivotably to an upper region of the reboard seat bar (4), wherein the two parts of the cushion (8, 11) are connected pivotably to each other, and wherein the lower part (11) of the cushion is connected displaceably to the lower region of the reboard seat bar (4);
**characterized by** the following feature:
f. the reboard seat bar (4) is furthermore pivotable into a reclining state in which it is arranged substantially parallel to the seat surface (2).

2. Seat according to Claim 1, **characterized in that**, in the stowed state, the reboard seat bar (4) is arranged in the edge region of the backrest (3) or surrounds the backrest (3) laterally, and at the upper edge.

3. Seat according to Claim 1 or 2, **characterized in that** the reboard seat bar (4) is of substantially U-shaped design.

4. Seat according to one of Claims 1 to 3, **characterized in that**, in the reboard use state, the reboard seat bar (4) is supported on armrests (7) of the seat and/or on retaining devices (6) connected to the armrests (7) of the seat.

5. Seat according to one of Claims 1 to 4, **characterized in that that** part of the cushion (8, 11) of the backrest which is pivotable together with the reboard seat bar (4) is padded on both sides.

6. Seat according to one of Claims 1 to 5, **characterized in that that** part of the cushion (8, 11) of the backrest which is pivotable together with the reboard seat bar (4) has a substantially rigid core.

7. Seat according to one of Claims 1 to 6, **characterized in that that** part of the cushion (8, 11) of the backrest which is pivotable together with the reboard seat bar (4) is of two-part design.

8. Seat according to one of Claims 1 to 7, **characterized in that** the reboard seat bar (4) and/or that part of the cushion (8, 11) of the backrest which is pivotable together with the reboard seat bar have/has fixing devices for a lap belt of the seat.

9. Seat according to one of Claims 1 to 8, **characterized in that** the length of the seat surface (2) is adjustable.

10. Seat according to one of Claims 1 to 9, **characterized in that** it has armrests (7), the distance of which from each other is adjustable.

11. Seat according to one of Claims 1 to 10, **characterized in that**, in addition to an armrest (7), said seat comprises a child armrest (23) which can take up a stowed position and a use position, the child armrest (23) being incorporated into the contour of the armrest (7) in the stowed position, and, in a use state, the child armrest (23) being at a reduced distance from the seat surface (2) in the vertical direction and being at a reduced distance from the opposite armrest (7) in the horizontal direction.

12. Seat according to Claim 11, **characterized in that** the child armrest (23) changes between the stowed state and the use state by pivoting about an axis (25) which is parallel to the armrest (7).

13. Seat according to Claim 11 or 12, **characterized in that** a magnet (26) which interacts with a metal element (27) is provided in order to retain the child armrest (23) in the stowed state.

14. Seat according to one of Claims 11 to 13, **characterized in that**, in order to release the magnet (26) from the metal element (27), the child armrest (23) is brought into an intermediate state between the stowed state and the use state.

15. Seat system for a means of transport, with a seat (2, 3) having a seat surface (2) and with a reboard seat bar (4) retaining a cushion (8, 11), comprising the following features:
a. a releasable connection (18, 19) is provided between the reboard seat bar (4) and the seat (2, 3), wherein the reboard seat bar (4) is mounted pivotably in relation to the seat (2, 3) in the connected state;
b. the reboard seat bar (4) is fixed in a position which is inclined in relation to the seat surface (2) in a reboard use state;
c. the cushion (8, 11) comprises an upper part (8) and a lower part (11), wherein the upper part (8) of the cushion (8, 11) is connected pivotably to an upper region of the reboard seat bar (4), wherein the two parts of the cushion (8, 11) are connected pivotably to each other, and wherein the lower part (11) of the cushion is connected displaceably to the lower region of the reboard seat bar (4);
**characterized by** the following feature:
d. the reboard seat bar (4) is pivotable into a reclining state in which it is arranged substantially parallel to the seat surface (2).

16. Seat system according to Claim 15, **characterized in that** the connection between the reboard seat bar (4) and the seat (2, 3) at the same time forms the pivot bearing (18, 19).

17. Seat system according to Claim 16, **characterized in that** the pivot bearing (18, 19) comprises a bearing bolt (18) which is guided in a bearing shell (19), and **in that**, in order to separate the reboard seat bar (4) from the seat (2, 3), the bearing bolt (18) is pulled out of the bearing shell (19).

18. Seat system according to one of Claims 15 to 17, **characterized in that** it comprises a retaining element (20, 21), and **in that**, in the reboard use state, the retaining element (20, 21) transfers force onto an armrest (7) of the seat (2, 3).

19. Seat system according to Claim 18, **characterized in that** the retaining element (20, 21) comprises a retaining hole (21) and a retaining bolt (20) which can be introduced into the retaining hole (21).

## Revendications

1. Siège pour un moyen de transport, comprenant une assise (2) et un dossier (3), ayant les particularités suivantes :
a) le siège présente un arceau de siège "reboard" (4) monté pivotant dans la partie inférieure du dossier (3) et/ou dans la zone de connexion/transition entre le dossier (3) et l'assise (2) ;
b) au moins une partie du rembourrage (8, 11) du dossier (3) est relié à l'arceau de siège "reboard" (4) et peut être amenée à pivoter avec l'arceau de siège "reboard" (4) ;
c) dans un état escamoté, l'arceau de siège "reboard" (4) est disposé substantiellement en parallèle au dossier (3) ;
d) l'arceau de siège "reboard" (4) peut être amené à pivoter de l'état escamoté dans un état d'utilisation "reboard" dans lequel il occupe une position angulaire entre les plans du dossier (3) et de l'assise (2) ;
e) à l'état d'utilisation "reboard", la partie du rembourrage (8, 11) du dossier (3), qui est reliée à l'arceau de siège "reboard" (4) et peut être amenée à pivoter avec cet arceau de siège, constitue l'assise d'un siège pour enfant "reboard", dans lequel une partie supérieure (8) du rembourrage est reliée de façon pivotante à une zone supérieure de l'arceau de siège "reboard" (4), dans lequel les deux parties du rembourrage (8, 11) sont reliées ensemble de façon pivotante, et dans lequel la partie inférieure (11) du rembourrage est reliée de façon mobile à la partie inférieure de l'arceau de siège "reboard" (4) ;
**caractérisé par** les particularités suivantes :
f) l'arceau de siège "reboard" (4) peut de plus être amené à pivoter dans un état couché dans lequel il est disposé substantiellement en parallèle à l'assise (2).

2. Siège selon la revendication 1, **caractérisé en ce qu'**à l'état escamoté, l'arceau de siège "reboard" (4) est disposé dans la partie périphérique du dossier (3) ou entoure le dossier (3) sur le côté ainsi que sur le bord supérieur.

3. Siège selon la revendication 1 ou 2, **caractérisé en ce que** l'arceau de siège "reboard" (4) est réalisé substantiellement en forme de U.

4. Siège selon l'une quelconque des revendications 1 à 3, **caractérisé en ce qu'**à l'état d'utilisation "reboard", l'arceau de siège "reboard" (4) prend appui sur des accoudoirs (7) du siège et/ou sur des dispositifs de maintien (6) reliés aux accoudoirs (7) du siège.

5. Siège selon l'une quelconque des revendications 1 à 4, **caractérisé en ce que** la partie du rembourrage (8, 11) du dossier, pivotante avec l'arceau de siège "reboard" (4), est rembourrée des deux côtés.

6. Siège selon l'une quelconque des revendications 1 à 5, **caractérisé en ce que** la partie du rembourrage (8, 11) du dossier, pivotante avec l'arceau de siège "reboard" (4), présente un noyau substantiellement rigide.

7. Siège selon l'une quelconque des revendications 1 à 6, **caractérisé en ce que** la partie du rembourrage (8, 11) du dossier, pivotante avec l'arceau de siège "reboard" (4), est réalisée en deux parties.

8. Siège selon l'une quelconque des revendications 1 à 7, **caractérisé en ce que** l'arceau de siège "reboard" (4) et/ou la partie du rembourrage (8, 11) du dossier, pivotante avec l'arceau de siège "reboard" (4), présente(nt) des dispositifs de fixation pour une ceinture ventrale du siège.

9. Siège selon l'une quelconque des revendications 1 à 8, **caractérisé en ce que** la longueur de l'assise (2) est réglable.

10. Siège selon l'une quelconque des revendications 1 à 9, **caractérisé en ce qu'**il présente des accoudoirs (7) dont l'espacement mutuel est réglable.

11. Siège selon l'une quelconque des revendications 1 à 10, **caractérisé en ce qu'**il comprend en plus d'un accoudoir (7) un accoudoir pour enfant (23) qui peut occuper une position escamotée et une position d'utilisation, dans lequel l'accoudoir pour enfant (23) dans la position escamotée est intégré dans le contour de l'accoudoir (7), et dans lequel l'accoudoir pour enfant (23) dans un état d'utilisation présente dans la direction verticale une distance diminuée par rapport à l'assise (2) et dans la direction horizontale une distance diminuée par rapport à l'accoudoir opposé (7).

12. Siège selon la revendication 11, **caractérisé en ce que** l'accoudoir pour enfant (23) change par pivotement autour d'un axe (25) parallèle à l'accoudoir (7) entre l'état escamoté et l'état d'utilisation.

13. Siège selon la revendication 11 ou 12, **caractérisé en ce qu'**un aimant (26) coopérant avec un élément métallique (27) est prévu pour maintenir l'accoudoir pour enfant (23) à l'état escamoté.

14. Siège selon l'une quelconque des revendications 11 à 13, **caractérisé en ce que** pour détacher l'aimant (26) de l'élément métallique (27), l'accoudoir pour enfant (23) est amené dans un état intermédiaire entre l'état escamoté et l'état d'utilisation.

15. Système de siège pour moyen de transport avec un siège (2, 3) présentant une assise (2) et un arceau de siège "reboard" (4) retenant un rembourrage (8, 11), comprenant les particularités suivantes :
a) une connexion amovible (18, 19) est prévue entre l'arceau de siège "reboard" (4) et le siège (2, 3), dans lequel, à l'état connecté, l'arceau de siège "reboard" (4) est monté pivotant par rapport à l'assise (2, 3) ;
b) dans un état d'utilisation "reboard", l'arceau de siège "reboard" (4) est fixé dans une position inclinée par rapport à l'assise (2) ;
c) le rembourrage (8, 11) comprend une partie supérieure (8) et une partie inférieure (11), dans lequel la partie supérieure (8) du rembourrage (8, 11) est connectée de façon pivotante à une partie supérieure de l'arceau de siège "reboard" (4), dans lequel les deux parties du rembourrage (8, 11) sont connectées de façon pivotante l'une à l'autre, et dans lequel la partie inférieure (11) du rembourrage est reliée de façon mobile à la zone inférieure de l'arceau de siège "reboard" (4) ;
**caractérisé par** les particularités suivantes :
d) l'arceau de siège "reboard" (4) peut être amené à pivoter dans un état couché dans lequel il est disposé substantiellement en parallèle à l'assise (2).

16. Système de siège selon la revendication 15, **caractérisé en ce que** la connexion entre l'arceau de siège "reboard" (4) et le siège (2, 3) constitue en même temps le palier de pivotement (18, 19).

17. Système de siège selon la revendication 16, **caractérisé en ce que** le palier de pivotement (18, 19) comprend un boulon de palier (18) guidé dans une coquille de palier (19), et **en ce que** pour la séparation de l'arceau de siège "reboard" (4) de l'assise (2,3), le boulon de palier (18) est retiré de la coquille de palier (19).

18. Système de siège selon l'une quelconque des revendications 15 à 17, **caractérisé en ce qu'**il comprend un élément de maintien (20, 21), et **en ce que** l'élément de maintien (20, 21), à l'état d'utilisation "reboard", transfère l'effort sur un accoudoir (7) du siège (2, 3).

19. Système de siège selon la revendication 18, **caractérisé en ce que** l'élément de maintien (20, 21) comprend un alésage de maintien (21) et un boulon de maintien (20) pouvant être introduit dans l'alésage de maintien (21).
